# EUROPÄISCHE PATENTSCHRIFT

(11) **EP 2 064 711 B1**
(45) Veröffentlichungstag und Bekanntmachung des Hinweises auf die Patenterteilung: **10.11.2010**
(21) Anmeldenummer: 07787317.2
(22) Anmeldetag: 10.07.2007
(51) Int. Cl.: H01B 7/285, H01B 13/32

(54) **VORRICHTUNG UND VERFAHREN ZUR LÄNGSABDICHTUNG VON ELEKTRISCHEN LEITUNGEN**
APPARATUS AND METHOD FOR LONGITUDINAL SEALING OF ELECTRICAL LINES
DISPOSITIF ET PROCÉDÉ D'ÉTANCHÉIFICATION LONGITUDINALE DE CÂBLES ÉLECTRIQUES

(30) Priorität: 08.09.2006 DE 102006042369
(43) Veröffentlichungstag der Anmeldung: 03.06.2009
(73) Patentinhaber: Robert Bosch GmbH, 70442 Stuttgart (DE)
(72) Erfinder: HOFMEISTER, Werner, 75417 Muehlacker (DE); SCHMATZ, Ulrich, 74354 Besigheim (DE); FRAHAMMER, Thomas, 72631 Aichtal (DE)
(86) Internationale Anmeldenummer: PCT/EP2007/057042
(87) Internationale Veröffentlichungsnummer: WO 2008/028707

(56) Entgegenhaltungen:
- DE-A1- 10 345 676
- US-B1- 6 184 473

## Beschreibung

### Stand der Technik

Die Erfindung geht aus von einer Vorrichtung und einem Verfahren zur Längsabdichtung von elektrischen Leitungen nach der Gattung des Patentanspruchs 1 bzw. 5.

Eine derartige Vorrichtung und ein derartiges Verfahren sind beispielsweise durch die DE 103 45 676 A1 bekannt geworden.

Das Eindringen von Wasser oder anderen Medien in Fahrzeug-Kabelbäume kann zum Ausfall der angeschlossenen Komponenten und Steuergeräte führen und somit auch zum Ausfall des Fahrzeuges, da flüssige Medien vor allem in Litzenleitungen durch die Hohlräume vorandringen. Daher werden bei entsprechenden Anforderungen, die durch den Verbauort gegeben sind, dicht ausgelegte Stecker verwendet, um einen dichten Kabelbaum zu erhalten. Für elektrische Leitungen, die nicht in einem Stecker enden, z.B. mit Ringkabelschuhen versehene Leitungen, werden häufig von außen Schrumpfschläuche mit Schmelzkleber zur Abdichtung verwendet.

Gerade im Motorraum oder gar bei Verbau von elektrischen Komponenten, wie Einspritzdüsen im Motor eines Kraftfahrzeuges, treten neben Wasser auch noch andere Medien auf, wie z.B. Motoröl. Ein bei den daraus resultierenden Anforderungen beständiger Heißkleber ist nicht erhältlich, so dass hier zu anderen, teuren Lösungen gegriffen werden muss, wie z.B. speziellen Ringkabelschuhen mit Dichtungseinsatz oder Trennstecker.

Aus der eingangs genannten DE 103 45 676 A1 ist es bekannt, eine flüssige Dichtmasse in Hohlräume einer elektrischen Leitung mittels einer Injektionsnadel einzubringen. Allerdings besteht die Gefahr, dass die Injektionsnadel mit der Zeit verschleißt oder verstopft und ausgewechselt werden muss.

### Offenbarung der Erfindung

Die vorliegende Erfindung ermöglicht es, bei Verwendung einer geeigneten Dichtmasse, elektrische Leitungen, insbesondere Litzenleitungen und Kabelbäume, auch gegen das Eindringen von Motoröl zu versiegeln. Erfindungsgemäß wird die Dichtmasse durch einen von der anderen Seite der Leitung aufgebrachten Unterdruck in die Hohlräume der Leitung eingebracht bzw. eingesaugt. Durch Eintauchen der Einsaugstelle in die Dichtmasse ist das Einsaugen der Dichtmasse in die Leitung sichergestellt, was auch direkt durch den zeitlichen Druckverlauf beim Einsaugprozess überprüft werden kann. Weiterhin besteht beim hier vorgeschlagenen Verfahren die Gefahr des Verschleißes oder des Verstopfens wie bei Injektionsnadeln nicht.

Weitere Vorteile und vorteilhafte Ausgestaltungen des Gegenstands der Erfindung sind der Beschreibung, der Zeichnung und den Ansprüchen entnehmbar.

### Kurze Beschreibung der Zeichnung

Ein Ausführungsbeispiel der erfindungsgemäßen Abdichtvorrichtung ist in den Zeichnungen dargestellt und in der nachfolgenden Beschreibung näher erläutert. Die Figuren sind teilweise abgebrochen, schematisch und nicht maßstäblich. Es zeigen:
- Fig. 1: die erfindungsgemäße Vorrichtung zur Längsabdichtung von elektrischen Leitungen; und
- Fig. 2: den Querschnitt einer abzudichtenden elektrischen Leitung.

### Ausführungsform der Erfindung

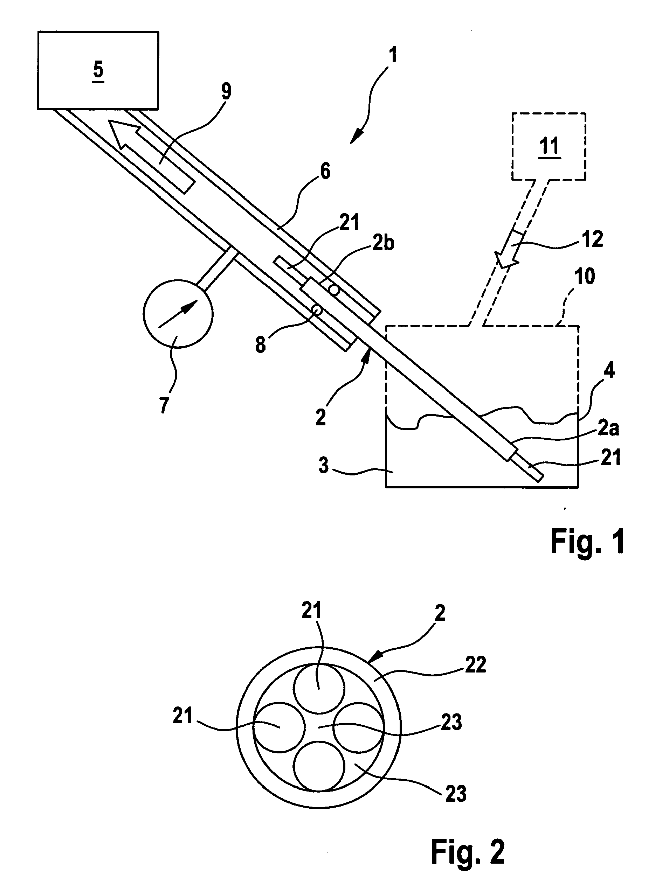

Die in **Fig. 1** gezeigte Vorrichtung **1** dient zur Längsabdichtung einer elektrischen Leitung **2** mit einer oder mehreren Leitungsfasern **21.** Die Leitungsfasern 21 sind, wie in **Fig. 2** gezeigt, von einer Außenumhüllung **22** umgeben, wobei zwischen den einzelnen Leitungsfasern 21 sowie zwischen den einzelnen Leitungsfasern 21 und der Außenumhüllung 22 Hohlräume **23** verbleiben.

Die Abdichtvorrichtung 1 umfasst ein mit flüssiger Dichtmasse **3** gefülltes Vorratsreservoir (Vorratsbehälter) **4** und eine Unterdruckquelle (Vakuumpumpe) **5** mit einem Adapteranschluss **6.** Der im Adapteranschluss 6 herrschende Druck wird mit einem Drucksensor 7 erfasst, der an eine nicht gezeigte Überwachungseinheit angeschlossen ist.

Wie in Fig. 1 gezeigt, wird das zu dichtende eine Ende **2a** der Leitung 2 in die flüssige Dichtmasse 3 eingetaucht. Das andere Ende **2b** der Leitung 2 wird - mittels einer Dichtung **8** abgedichtet - an den Adapteranschluss 6 angeschlossen. Durch den Unterdruck angezogen (Pfeilrichtung **9)** dringt die Dichtmasse 3 in die Hohlräume 23 der Leitung 2 ein, wobei ihre Eindringtiefe in die Leitung 2 von der Prozessdauer sowie der Viskosität der Dichtmasse 3 abhängig ist. Gegebenenfalls wird die Dichtmasse 3 durch einen anschließenden Behandlungsschritt, wie z.B. eine Temperaturbehandlung, nachbehandelt, um die volle Dichtwirkung zu erzielen. Vorteilhaft können hierbei auch mehrere Leitungen 2 gleichzeitig über den Adapter 6 mit Unterdruck beaufschlagt und mit der Dichtmasse 3 abgedichtet werden. Wenn das zu dichtende Ende 2a der Leitung 2, genauer gesagt die Außenumhüllung 22, in die Dichtmasse 3 eingetaucht ist, ist das Einsaugen der Dichtmasse 3 in die Leitung 2 sichergestellt. Dieser Vorgang kann auch direkt durch den mit dem Drucksensor 7 erfassten Druckverlauf beim Einsaugprozess überprüft werden.

Wie in Fig. 1 gestrichelt angedeutet, kann das Dichtmassen-Vorratsreservoir 4 alternativ oder zusätzlich zur Unterdruckquelle mit einem Deckel **10** druckdicht abgeschlossen und an eine Überdruckquelle **11** angeschlossen sein. Alternativ bzw. zusätzlich zur Wirkung des Unterdrucks führt so auch die Wirkung des Überdrucks (Pfeilrichtung **12)** zum Einbringen der Dichtmasse 3 in die zu dichtende Leitung 2.

## Patentansprüche

1. Verfahren zum Längsabdichten von elektrischen Leitungen (2), welche eine oder mehrere innerhalb einer Außenumhüllung (22) angeordnete Leitungsfasern (21) und Hohlräume (23) zwischen den einzelnen Leitungsfasern (21) sowie zwischen den einzelnen Leitungsfasern (21) und der Außenumhüllung (22) aufweisen,
**dadurch gekennzeichnet,**
**dass** das zu dichtende eine Ende (2a) der Leitung (2) in eine flüssige Dichtmasse (3) eingetaucht wird und das andere Ende (2b) der Leitung (2) mit Unterdruck beaufschlagt wird.

2. Abdichtverfahren insbesondere nach Anspruch 1, **dadurch gekennzeichnet, dass** das Vorratsreservoir (4) der flüssigen Dichtmasse (3), in das das eine Ende (2a) der Leitung (2) eingetaucht wird, mit Überdruck beaufschlagt wird.

3. Abdichtverfahren nach Anspruch 1 oder 2, **dadurch gekennzeichnet, dass** die in die Leitung (2) eingesaugte Dichtmasse (3) anschließend einer Nachbehandlung, insbesondere einer Temperaturbehandlung, unterzogen wird.

4. Abdichtverfahren nach einem der vorhergehenden Ansprüche, **dadurch gekennzeichnet, dass** der Unterdruck beim Einsaugen der Dichtmasse (3) überwacht wird.

5. Vorrichtung (1) zur Längsabdichtung von elektrischen Leitungen (2), insbesondere zum Durchführen des Abdichtverfahrens nach einem der vorhergehenden Ansprüche,
**gekennzeichnet durch** ein Vorratsreservoir (4) für die flüssige Dichtmasse (3),
in die das zu dichtende eine Ende (2a) der Leitung (2) eingetaucht wird, und **durch** eine Unterdruckquelle (5), an die das andere Ende (2b) der Leitung (2) angeschlossen wird.

6. Abdichtvorrichtung nach Anspruch 5, **dadurch gekennzeichnet, dass** die Unterdruckquelle (5) einen Adapter (6) aufweist, an den die abzudichtende Leitungen (2) anschließbar ist.

7. Abdichtvorrichtung insbesondere nach Anspruch 5 oder 6, **dadurch gekennzeichnet, dass** das Dichtmassen-Vorratsreservoir (4) in sich druckdicht abgeschlossen ist und eine Überdruckquelle (11) vorgesehen ist, an die das Dichtmassen-Vorratsreservoir (4) anschließbar ist.

8. Abdichtvorrichtung nach einem der Ansprüche 5 bis 7, **dadurch gekennzeichnet, dass** ein Drucksensor (7) vorgesehen ist, der den Unterdruck der Unterdruckquelle (5) erfasst.

## Claims

1. Method for the longitudinal sealing of electrical lines (2), which have one or more line fibres (21), arranged within an outer sheathing (22), and cavities (23) between the individual line fibres (21) as well as between the individual line fibres (21) and the outer sheathing (22), **characterized in that** the one end (2a) to be sealed of the line (2) is immersed in a liquid sealing compound (3) and the other end (2b) of the line (2) is subjected to negative pressure.

2. Sealing method, in particular according to Claim 1, **characterized in that** the supply reservoir (4) of the liquid sealing compound (3) into which the one end (2a) of the line (2) is immersed is subjected to positive pressure.

3. Sealing method according to Claim 1 or 2, **characterized in that** the sealing compound (3) sucked into the line (2) is subsequently subjected to a post-treatment, in particular a thermal treatment.

4. Sealing method according to one of the preceding claims, **characterized in that** the negative pressure is monitored during the sucking in of the sealing compound (3).

5. Apparatus (1) for the longitudinal sealing of electrical lines (2), in particular for carrying out the sealing method according to one of the preceding claims, **characterized by** a supply reservoir (4) for the liquid sealing compound (3), into which the one end (2a) to be sealed of the line (2) is immersed, and by a negative-pressure source (5), to which the other end (2b) of the line (2) is connected.

6. Sealing apparatus according to Claim 5, **characterized in that** the negative-pressure source (5) has an adapter (6), to which the lines (2) to be sealed can be connected.

7. Sealing apparatus, in particular according to Claim 5 or 6, **characterized in that** the sealing-compound supply reservoir (4) is closed off in a pressure-tight manner and a positive-pressure source (11) to which the sealing-compound supply reservoir (4) can be connected is provided.

8. Sealing apparatus according to one of Claims 5 to 7, **characterized in that** a pressure sensor (7) which senses the negative pressure of the negative-pressure source (5) is provided.

## Revendications

1. Procédé d'étanchéification longitudinale de lignes électriques (2) qui présentent une ou plusieurs fibres conductrices (21) disposées à l'intérieur d'une gaine extérieure (22) et des espaces (23) entre les fibres conductrices individuelles (21) ainsi qu'entre les fibres conductrices individuelles (21) et la gaine extérieure (22), **caractérisé en ce que**
l'une des extrémités (2a) à étanchéifier de la ligne (2) est plongée dans une masse d'étanchéité liquide (3) et l'autre extrémité (2b) de la ligne (2) est soumise à une dépression.

2. Procédé d'étanchéification selon la revendication 1, **caractérisé en ce que** le réservoir (4) de masse d'étanchéité liquide (3), dans lequel est plongée l'une des extrémités (2a) de la ligne (2), est soumis à une surpression.

3. Procédé d'étanchéification selon la revendication 1 ou 2, **caractérisé en ce que** la masse d'étanchéité (3) aspirée dans la ligne (2) est ensuite soumise à un post-traitement, notamment à un traitement thermique.

4. Procédé d'étanchéification selon l'une quelconque des revendications précédentes, **caractérisé en ce que** la dépression lors de l'aspiration de la masse d'étanchéité (3) est contrôlée.

5. Dispositif (1) pour l'étanchéification longitudinale de lignes électriques (2), notamment pour mettre en oeuvre le procédé d'étanchéification selon l'une quelconque des revendications précédentes,
**caractérisé par** un réservoir (4) pour la masse d'étanchéité liquide (3), dans laquelle est plongée l'une des extrémités (2a) de la ligne (2) à étanchéifier et par une source de dépression (5) à laquelle est raccordée l'autre extrémité (2b) de la ligne (2).

6. Dispositif d'étanchéification selon la revendication 5, **caractérisé en ce que** la source de dépression (5) présente un adaptateur (6) auquel peut être raccordée la ligne (2) à étanchéifier.

7. Dispositif d'étanchéification notamment selon la revendication 5 ou 6, **caractérisé en ce que** le réservoir de masse d'étanchéité (4) est fermé en soi de manière étanche à la pression, et une source de surpression (11) est prévue, à laquelle peut se raccorder le réservoir de masse d'étanchéité (4).

8. Dispositif d'étanchéification selon l'une quelconque des revendications 5 à 7, **caractérisé en ce qu'**un capteur de pression (7) est prévu, lequel détecte la dépression de la source de dépression (5).
